(19) Europäisches Patentamt
European Patent Office
Office européen des brevets

(11) Veröffentlichungsnummer : **0 100 839**
**B1**

(12) # EUROPÄISCHE PATENTSCHRIFT

(45) Veröffentlichungstag der Patentschrift : **07.05.86**

(51) Int. Cl.⁴ : **C 07 F 9/54**

(21) Anmeldenummer : **83105842.5**

(22) Anmeldetag : **15.06.83**

(54) **Katalytische Hydrierung acetylenischer Phosphoniumsalze.**

(30) Priorität : **16.07.82 CH 4359/82**
**16.05.83 CH 2637/83**

(43) Veröffentlichungstag der Anmeldung :
**22.02.84 Patentblatt 84/08**

(45) Bekanntmachung des Hinweises auf die Patenterteilung : **07.05.86 Patentblatt 86/19**

(84) Benannte Vertragsstaaten :
**AT BE CH DE FR GB IT LI NL**

(56) Entgegenhaltungen :
**DE-B- 1 203 264**
**Chemical Abstracts, Band 81, Nr. 19, 11. November 1974, Columbus, Ohio, USA, Seite 559, Abstract Nr. 120821n**
**O. ISLER "Carotenoids", 1971, BIRKHÄUSER VERLAG, Basel, Seiten 389, 390, 571**

(73) Patentinhaber : **F. HOFFMANN-LA ROCHE & CO. Aktiengesellschaft**

**CH-4002 Basel (CH)**

(72) Erfinder : **Broger, Emil Albin, Dr.**
**Obere Egg 11**
**CH-4312 Magden (CH)**

(74) Vertreter : **Cottong, Norbert A. et al**
**Grenzacherstrasse 124 Postfach 3255**
**CH-4002 Basel (CH)**

**EP 0 100 839 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren zur Herstellung von Phosphoniumsalzen von Polyenen, welches als Zwischenstufe in Carotinoid- und Retinoidsynthesen besonders geeignet ist.

Erfindungsgemäss werden Verbindungen der allgemeinen Formel

$$R^1-CH=CH-\overset{\overset{\displaystyle CH_3}{|}}{C}=CH-CH_2P(R^2)_3^{\oplus}\ X^{\ominus} \qquad (I)$$

worin $R^1$ einen gegebenenfalls durch eine Hydroxygruppe oder eine geschützte Hydroxygruppe substituierten 2,6,6-Trimethyl-1-cyclohexen-1-yl- oder 2,3,6-Trimethylphenylrest darstellt, $R^2$ Aryl bedeutet und $X^{\ominus}$ ein in Phosphoniumsalzen übliches Anion bezeichnet, dadurch erhalten, dass man eine Verbindung der allgemeinen Formel

$$R^1-C\equiv C-\overset{\overset{\displaystyle CH_3}{|}}{C}=CH-CH_2P(R^2)_3^{\oplus}\ X^{\ominus} \qquad (II)$$

worin $R^1$, $R^2$ und $X^{\ominus}$ die obigen Bedeutungen haben, in einem organischen Lösungsmittel oder wässrig-organischen Lösungsmittelgemisch in Gegenwart eines Nickel-, Palladium-, Platin-, Kobalt-, Rhodium-, Iridium- oder Ruthenium-haltigen Katalysators partiell hydriert.

Der Ausdruck « geschützte Hydroxygruppe » bedeutet im Rahmen der vorliegenden Erfindung übliche Hydroxyschutzgruppen, wie Aether-, Ester- und Acetalgruppen, wobei auch solche Gruppen mitumfasst werden, welche bei der Hydrierung in die Hydroxygruppe übergeführt werden. Bevorzugte geschützte Hydroxygruppen sind die Alkoxy-, Acyloxy- und Acetalgruppen mit bis zu 7 Kohlenstoffatomen, wie beispielsweise Methoxy, Aethoxy, Acetoxy, (2-Methoxy-2-propyl)oxy und Benzyloxy, und insbesondere die Methoxy- und die Acetoxygruppe.

Eine gegebenenfalls in $R^1$ vorhandene Hydroxygruppe oder geschützte Hydroxygruppe steht vorzugsweise in Position 4 des Cyclohexenyl- bzw. des Phenylrestes. Besonders bevorzugte Reste $R^1$ sind 2,6,6-Trimethyl-1-cyclohexen-1-yl, 4-Hydroxy-2,6,6-trimethyl-1-cyclohexen-1-yl, 2,3,6-Trimethylphenyl und 4-Methoxy-2,3,6-trimethylphenyl.

$R^2$ bezeichnet einen in Phosphoniumsalzen üblichen Arylrest, wie Phenyl und Tolyl, insbesondere Phenyl.

$X^{\ominus}$ umfasst alle in Phosphoniumsalzen üblichen Anionen, wie Chlorid, Bromid, Perchlorat und Hydrogensulfat. Vorzugsweise bedeutet X Chlor oder Brom.

Es wurde gefunden, dass die Verbindungen der Formel I nach dem erfindungsgemässen Verfahren in hoher Ausbeute erhalten werden können. Dies ist überraschend, als entsprechende Verbindungen ohne Phosphoniumgruppe bisher nicht oder nur in unbefriedigender Ausbeute hydriert werden konnten und andererseits die katalytische Hydrierung von acetylenischen Phosphoniumsalzen bisher nicht bekannt war.

In Chem. Abstr. *81*, 120821n wird zwar bereits die Hydrierung eines acetylenischen Phosphoniumsalzes andeutungsweise erwähnt. In der Originalliteratur, U.S. Patent Nr. 3.830.844, fehlt jedoch ein entsprechender Hinweis ; anstelle der Hydrierung des Phosphoniumsalzes wird dort die Hydrierung einer Vorstufe des Phosphoniumsalzes beschrieben. Das in Chem. Abstr. *81*, 120821n offenbarte, acetylenische Phosphoniumsalz unterscheidet sich von den Verbindungen der obigen Formel I insbesondere durch die Anwesenheit einer konjugierten Carbonylgruppe und die Stellung der Dreifachbindung bezüglich des Rings. Eine Angabe der Hydriermethode fehlt.

Das erfindungsgemässe Verfahren kann mit gebräuchlichen homogenen und heterogenen Hydrierkatalysatoren durchgeführt werden. Bevorzugt sind heterogene Katalysatoren. Die obige Definition umfasst sowohl metallische Katalysatoren als auch Verbindungen der genannten Metalle, wie beispielsweise Palladiumchlorid, Palladiumoxid, Platinoxid oder Tris-(triphenylphosphin)rhodiumchlorid (Wilkinson-Katalysator). Heterogene Katalysatoren können mit oder ohne Trägermaterial verwendet werden. Geeignete Trägermaterialien sind beispielsweise Kohle, Kieselgur, Bariumsulfat und Kalziumcarbonat. Weiterhin umfasst die obige Definition auch Mischkatalysatoren und mit Fremdmetallen dotierte Katalysatoren. Als Fremdmetalle eignen sich insbesondere Schwermetalle wie beispielsweise Molybdän, Palladium, Kobalt, Ruthenium, Vanadium, Mangan, Blei, Kupfer, Chrom, Eisen und Zirkonium. Ferner lässt sich die Selektivität des Katalysators durch Verwendung von Katalysatorgiften häufig noch steigern. Die obige Definition umfasst daher auch teilweise vergiftete Katalysatoren. Als Katalysatorgifte eignen sich die üblicherweise zur Vergiftung von Hydrierkatalysatoren verwendeten Verbindungen, beispielsweise die üblichen Schwefelverbindungen. Ein besonders bevorzugtes Katalysatorgift ist 1,2-Bis(2-hydroxyäthylthio)äthan.

Vorzugsweise werden in dem erfindungsgemässen Verfahren metallische Katalysatoren verwendet,

welche gegebenenfalls mit Fremdmetallen dotiert und/oder durch Katalysatorgifte teilweise vergiftet sein können. Bevorzugte metallische Katalysatoren sind Platin, Nickel, Palladium und insbesondere Raney-Nickel. Besonders bevorzugter Katalysator ist Raney-Nickel, welches gegebenenfalls mit Molybdän, Ruthenium, Mangan, Palladium, Kobalt, Blei, Kupfer oder Vanadium dotiert oder mit 1,2-Bis(2-hydroxyäthylthio)äthan teilweise vergiftet sein kann.

Die Katalysatormenge ist nicht kritisch und kann daher in weiten Grenzen variieren. Zudem kann der Katalysator im allgemeinen mehrmals verwendet werden.

Die erfindungsgemässe Hydrierung kann in einem organischen Lösungsmittel oder einem wässrig-organischen Lösungsmittelgemisch durchgeführt werden. Geeignete organische Lösungsmittel bzw. organische Komponenten von wässrig-organischen Lösungsmittelgemischen sind beispielsweise Alkohole, Ester, Aether und Ketone. Ketone werden jedoch unter den angewandten Reaktionsbedingungen im allgemeinen ebenfalls reduziert. Beispiele bevorzugter Lösungsmittel sind Methanol, Aethanol und Gemische von Methanol, Aethanol, Methylacetat, Tetrahydrofuran oder Aceton mit Wasser. Besonders geeignet ist Methanol, in welchem die Hydrierung besonders rasch und selektiv verläuft und welches zudem ein ausgezeichnetes Lösungsmittel für die Phosphoniumsalze ist.

Temperatur und Druck sind nicht kritisch. Die optimalen Bedingungen variieren je nach verwendetem Edukt, Katalysator und Lösungsmittel. Im allgemeinen wird jedoch eine Temperatur von etwa 0° bis 100 °C, vorzugsweise etwa 20° bis 50 °C, und ein Wasserstoffdruck von etwa 0,1 bis 100 bar angewendet. Die Reaktion kann insbesondere auch bei Raumtemperatur und unter Normaldruck durchgeführt werden. Bei tieferen Temperaturen wird im allgemeinen eine etwas höhere Ausbeute erzielt, wogegen bei höheren Temperaturen im allgemeinen die Hydrierdauer deutlich verkürzt werden kann und die Selektivität des Katalysators trotzdem gut erhalten bleibt.

Die Verbindungen der Formel I können, insbesondere wenn als Ausgangsmaterial bereits ein Isomerengemisch eingesetzt wurde, als Isomerengemisch anfallen. Reine Isomere können gewünschtenfalls in an sich bekannter Weise erhalten werden, beispielsweise durch Isomerisierung (mit Schwermetallsalzen, mit einer Spur Säure oder durch Erhitzen) und/oder Umkristallisation.

Die Ausgangsmaterialien der Formel II sind bekannt oder können in analoger Weise zu bekannten Verbindungen hergestellt werden.

Die Verbindungen der allgemeinen Formel

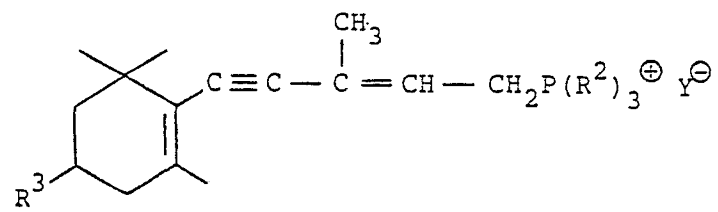

(III)

worin Y Halogen bezeichnet, $R^2$ die obige Bedeutung hat und $R^3$ Hydroxy oder eine geschützte Hydroxygruppe darstellt, können jedoch in einfacher Weise auch dadurch erhalten werden, dass man eine Verbindung der allgemeinen Formel

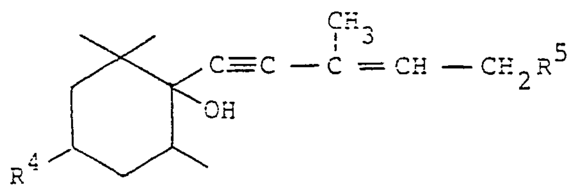

(IV)

worin $R^4$ und $R^5$ Hydroxy oder geschützte Hydroxygruppen darstellen, mit Halogenwasserstoff und anschliessend mit Triarylphosphin umsetzt.

Dieses Verfahren kann unter den Bedingungen durchgeführt werden, welche üblicherweise für die Umsetzung eines allylischen Alkohols zu einem Halogenid und die weitere Ueberführung in ein Phosphoniumsalz angewendet werden. Y bedeutet Chlor, Brom oder Jod, vorzugsweise Chlor oder Brom. Die Umsetzung mit Halogenwasserstoff erfolgt vorzugsweise durch Zugabe von wässriger Halogenwasserstofflösung bei etwa 0-70 °C. Die Umsetzung mit Triarylphosphin wird vorzugsweise unter Rückflussbedingungen durchgeführt. Bevorzugter Arylrest $R^2$ ist Phenyl.

$R^3$, $R^4$ und $R^5$ bedeuten Hydroxy oder eine der oben definierten geschützten Hydroxygruppen. Für $R^4$ und $R^5$ umfasst die Definition selbstverständlich auch Hydroxyschutzgruppen, welche unter den Reaktionsbedingungen in die Hydroxygruppe übergeführt werden.

Die Verbindungen der Formel I können in bekannter Weise in Carotinoide oder Retinoide übergeführt werden.

Die Erfindung wird durch die folgenden Beispiele weiter veranschaulicht. HPLC bedeutet Hochdruckflüssigchromatographie. Die Aufarbeitung der Rohprodukte und die Isomerentrennungen bzw. Isomerisierungen wurden im allgemeinen nicht optimiert.

## Beispiel 1

In einem Hydrierkolben mit Begasungsrührer wurde eine Lösung von 56,0 g 90 %-igem (4R, 2ZE)-[5-(4-Hydroxy-2,6,6-trimethyl-1-cyclohexen-1-yl)-3-methyl-2-penten-4-inyl]triphenylphosphoniumbromid (Isomerenverhältnis Z/E = 62,5 : 37,2) in 1 Liter Methanol in Gegenwart von 15 g Raney-Nickel (methanolfeucht) bei 22 °C und 0,1 bar Wasserstoff hydriert, bis die Wasserstoffaufnahme zum Stillstand kam und weniger als 2 % Edukt vorhanden waren (7,5 Stunden ; Wasserstoffaufnahme ca. 2,2 l). Der Katalysator wurde durch Absaugen der Lösung abgetrennt, im Hydrierkolben mit 250 ml Methanol (durch Aufschlämmen und Dekantieren) gewaschen und nach Zugabe von 2 g frischem Raney-Nickel für eine weitere Hydrierung eingesetzt (wie oben beschrieben). Die erforderliche Hydrierdauer mit dem rezyklisierten Katalysator betrug 22 Stunden. Die Hydrierlösungen beider Ansätze wurden filtriert und im Rotationsverdampfer (40 °C/15 mbar) zur Trockene eingedampft, wobei als Rückstand 96,4 g brauner, fester Schaum von (4R, 2ZE, 4Z)-[5-(4-Hydroxy-2,6,6-trimethyl-1-cyclohexen-1-yl)-3-methyl-2,4-pentadienyl]triphenylphosphoniumbromid (chemische Ausbeute 84 % gemäss HPLC) erhalten wurden. Zu einer Lösung des Rückstandes in 500 ml Methylenchlorid wurden unter Rühren bei Raumtemperatur 1 200 ml Essigester zugetropft, wobei das Produkt kristallisierte. Die Suspension wurde 2 Stunden bei Raumtemperatur gerührt und zur Vervollständigung der Kristallisation 16 Stunden im Kühlschrank stehengelassen. Die gelbbraunen Kristalle wurden abfiltriert, mit 200 ml Methylenchlorid/Essigester (Volumenverhältnis 1 : 2) gewaschen und bei 60 °C/15 mbar während 8 Stunden getrocknet, wobei 65,0 g (64,8 %) (4R, 2ZE, 4Z)-[5-(4-Hydroxy-2,6,6-trimethyl-1-cyclohexen-1-yl)-3-methyl-2,4-pentadienyl]triphenylphosphoniumbromid erhalten wurden ; Smp. 188-190 °C, $[\alpha]_D^{20}$ = — 18,5° (c = 1, Chloroform). Gemäss HPLC enthielt das Produkt 63,5 % des (2Z, 4Z)-Isomers und 31,0 % des (2E, 4Z)-Isomers.

## Beispiel 2

In einem Sulfierkolben mit Begasungsrührer wurde eine Lösung von 3,09 g (4R, 2ZE)-[5-(4-Hydroxy-2,6,6-trimethyl-1-cyclohexen-1-yl)-3-methyl-2-penten-4-inyl]triphenylphosphoniumchlorid (Isomerenverhältnis Z/E = 9 : 91) in 240 ml Methanol in Gegenwart von 1,8 g wasserfeuchtem Raney-Nickel bei Raumtemperatur und Normaldruck während 2 Stunden hydriert (Wasserstoffaufnahme ca. 190 ml). Der Katalysator wurde abfiltriert und mit 20 ml Methanol gewaschen. Das Filtrat wurde im Rotationsverdampfer bei 40 °C/15 mbar eingedampft. Das erhaltene Rohprodukt von (4R, 2ZE, 4Z)-[5-(4-Hydroxy-2,6,6-trimethyl-1-cyclohexen-1-yl)-3-methyl-2,4-pentadienyl]triphenylphosphoniumchlorid [chemische Ausbeute 91,7 %, Isomerenverhältnis (2E,.4Z)/(2Z/4Z) = 80,2 : 11,5 gemäss HPLC] wurde in 20 ml Methylenchlorid gelöst und durch Zutropfen von 60 ml Essigester kristallisiert. Nach 16-stündigem Stehen bei 0 °C wurden die hellbeigen Kristalle abfiltriert, mit wenig Methylenchlorid/Essigester (Volumenverhältnis 1 : 2) gewaschen und getrocknet, wobei 2,27 g (73,2 %) Phosphoniumsalz, enthaltend 85,9 % (4R, 2E, 4Z)-Isomer und 11,4 % (4R, 2Z, 4Z)-Isomer, erhalten wurden ; Smp. 203-205 °C. Durch dreimalige Umkristallisation aus Methylenchlorid/Essigester konnten 560 mg reines [5-(4-Hydroxy-2,6,6-trimethyl-1-cyclohexen-1-yl)-3-methyl-2,4-pentadienyl]triphenylphosphoniumchlorid [bestehend aus 97,3 % (4R, 2E, 4Z)-Isomer und 2,7 % (4R, 2Z, 4Z)-Isomer gemäss HPLC] erhalten werden ; Smp. 210-212 °C ; $[\alpha]_D^{20}$ = — 25,4° (c = 1, Chloroform).

## Beispiel 3

In analoger Weise zu Beispiel 2 wurde eine Lösung von 7,72 g (4R, 2Z)-[5-(4-Hydroxy-2,6,6-trimethyl-1-cyclohexen-1-yl)-3-methyl-2-penten-4-inyl]triphenylphosphoniumchlorid [enthaltend 0,4 % des (4R, 2E)-Isomers] in 480 ml Methanol in Gegenwart von 3,6 g wasserfeuchtem Raney-Nickel hydriert. Innert 4,5 Stunden wurden ca. 600 ml Wasserstoff aufgenommen. Das nach Filtration und Eindampfen erhaltene Rohprodukt (7,28 g), welches gemäss HPLC 82,4 % (4R, 2Z, 4Z)-[5-(4-Hydroxy-2,6,6-trimethyl-1-cyclohexen-1-yl)-3-methyl-2,4-pentadienyl]triphenylphosphoniumchlorid enthielt, wurde in 30 ml Methylenchlorid gelöst und durch Zutropfen von 75 ml Essigester bei Raumtemperatur kristallisiert. Nach 16-stündigem Stehen bei 0 °C wurde die Suspension filtriert und das Produkt mit 20 ml Methylenchlorid/Essigester (Volumenverhältnis 1 : 2) gewaschen und getrocknet, wobei 5,31 g 92,9 %-iges (4R, 2Z, 4Z)-[5-(4-Hydroxy-2,6,6-trimethyl-1-cyclohexen-1-yl)-3-methyl-2,4-pentadienyl]triphenylphosphoniumchlorid als hellgraue Kristalle mit Smp. 112-114 °C erhalten wurden ; Ausbeute 68,4 %. Eine nochmalige Umkristallisation aus Methylenchlorid/Essigester lieferte 2,7 g farblose Kristalle mit Smp. 114-116 °C, $[\alpha]_D^{20}$ = — 18,3° (c = 1, Chloroform), die das reine (4R, 2Z, 4Z)-Isomere und 10,6 % Methylenchlorid enthielten.

## Beispiel 4

In analoger Weise zu Beispiel 2 wurde eine Lösung von 3,26 g [5-(2,6,6-Trimethyl-1-cyclohexen-1-yl)-3-methyl-2-penten-4-inyl]triphenylphosphoniumbromid (Isomerenverhältnis E/Z = 3 : 1) in 240 ml Methanol in Gegenwart von 1,8 g wasserfeuchtem Raney-Nickel hydriert. Innert 6 Stunden wurden 198 ml Wasserstoff aufgenommen. Das nach Filtration und Eindampfen erhaltene Rohprodukt (3,2 g) von (2ZE, 4Z)-[5-(2,6,6-Trimethyl-1-cyclohexen-1-yl)-3-methyl-2,4-pentadienyl]triphenylphosphoniumbromid [chemische Ausbeute 86 %, Isomerenverhältnis (2E, 4Z)/(2Z, 4Z) = 65 : 21 gemäss HPLC] wurde bei 0 °C aus 30 ml Tetrahydrofuran umkristallisiert. Die weissen Kristalle wurden zweimal mit je 10 ml kaltem Tetrahydrofuran gewaschen und über Nacht bei 40 °C/15 mbar getrocknet, wobei 1,9 g (58 %) Produkt [enthaltend 77 % (2E, 4Z)-Isomer und 18 % (2Z, 4Z)-Isomer gemäss HPLC] erhalten wurden ; Smp. 180-182 °C. Zweimalige Umkristallisation aus Methylenchlorid/Tetrahydrofuran lieferte 1,2 g des (2E, 4Z)-Isomers als weisse Kristalle mit Smp. 183-185 °C.

## Beispiel 5

In analoger Weise zu Beispiel 2 wurde eine Lösung von 3,24 g [3-Methyl-5-(2,3,6-trimethylphenyl)-2-penten-4-inyl]triphenylphosphoniumbromid (Isomerenverhältnis Z/E = 1 : 2) in 240 ml Methanol in Gegenwart von 1,8 g wasserfeuchtem Raney-Nickel hydriert. Innert 7 Stunden wurden 150 ml Wasserstoff aufgenommen. Das nach Filtration und Eindampfen erhaltene Rohprodukt (3,3 g) von (2E, 4EZ)-[3-Methyl-5-(2,3,6-trimethylphenyl)-2,4-pentadienyl]triphenylphosphoniumbromid [chemische Ausbeute 98 %, Isomerenverhältnis (2E, 4Z)/(2E, 4E) = 84 : 14 gemäss HPLC] wurde in 10 ml Methylchlorid aufgenommen und durch Zugabe von 60 ml Essigester und Abdampfen des Methylenchlorids kristallisiert. Die Suspension wurde 4 Stunden bei Raumtemperatur gerührt, dann filtriert und die Kristalle mit wenig kaltem Essigester gewaschen und bis zur Gewichtskonstanz bei Raumtemperatur und 0,01 mbar getrocknet, wobei 1,60 g (50 %) reines Produkt [enthaltend 85,9 % (2E, 4Z)-Isomer und 14,1 % (2E, 4E)-Isomer gemäss HPLC] als beige Kristalle mit Smp. 85-86 °C erhalten wurden. Durch zweimalige Umkristallisation aus Methylenchlorid/Essigester konnte reines (2E, 4Z)-Isomer in Form weisser Kristalle erhalten werden ; Smp. 154-157 °C (stark abhängig von der Aufheizgeschwindigkeit).

## Beispiel 6

In analoger Weise zu Beispiel 2 wurde eine Lösung von 3,42 g (Z)-[5-(4-Methoxy-2,3,6-trimethylphenyl)-3-methyl-2-penten-4-inyl]triphenylphosphoniumbromid in 240 ml Methanol in Gegenwart von 1,8 g wasserfeuchtem Raney-Nickel hydriert. Innert 28 Stunden wurden 188 ml Wasserstoff aufgenommen. Das nach Filtration und Eindampfen erhaltene Rohprodukt (3,4 g), welches 89,4 % (2Z, 4Z)-[5-(4-Methoxy-2,3,6-trimethylphenyl)-3-methyl-2,4-pentadienyl]triphenylphosphoniumbromid enthielt (Ausbeute 89 %), wurde in 20 ml Methylenchlorid gelöst und durch Zutropfen von 50 ml Essigester unter Rühren kristallisiert. Die Suspension wurde über Nacht bei 0 °C stehengelassen, filtriert und das mit wenig Essigester/Methylenchlorid (Volumenverhältnis 5 : 1) gewaschene Produkt bei 40 °C/0,01 mbar getrocknet. Es wurden 1,8 g 99,6 %-iges (2Z, 4Z)-[5-(4-Methoxy-2,3,6-trimethylphenyl)-3-methyl-2,4-pentadienyl]triphenylphosphoniumbromid als weisse Kristalle mit Smp. 202-204 °C erhalten ; Ausbeute 52,5 %.

## Beispiel 7

In analoger Weise zu Beispiel 2 wurden die in Tabelle 1 zusammengestellten Versuche durchgeführt, wobei unter Verwendung verschiedener Katalysatoren jeweils 3,36 g (4R, 2ZE)-[5-(4-Hydroxy-2,6,6-trimethyl-1-cyclohexen-1-yl)-3-methyl-2-penten-4-inyl]triphenylphosphoniumbromid (Isomerenverhältnis E/Z = 73 : 27) in 240 ml Methanol zu (4R, 2ZE, 4Z)-[5-(4-Hydroxy-2,6,6-trimethyl-1-cyclohexen-1-yl)-3-methyl-2,4-pentadienyl]triphenylphosphoniumbromid hydriert wurden. In Tabelle 1 bedeutet p den Druck, T die Temperatur und t die Hydrierdauer. Bei Versuchen, die unter erhöhtem Druck durchgeführt wurden, war eine Messung der verbrauchten Menge Wasserstoff aus technischen Gründen nicht möglich. Die Zusammensetzung der Hydrierprodukte wurde mittels HPLC (Flächenprozente) bestimmt.

(Siehe Tabelle 1 Seite 6 f.)

Tabelle 1

| Katalysator | p (bar) | T ($^{o}C$) | t (h) | $H_2$-Aufnahme (Mol-Aeq.) | Zusammensetzung des Hydrierproduktes (%) | | | | |
|---|---|---|---|---|---|---|---|---|---|
| | | | | | Edukt | | Produkt | | |
| | | | | | (2E) | (2Z) | (2E,4Z) | (2Z,4Z) | total |
| 3,6 g Ni/Kieselgur (52%) | 90 | 50 | 22 | | 2,3 | 0,4 | 62,3 | 21,1 | 83,4 |
| 1,0 g Pd/C (5%) | 1 | 22 | 25 | 1,2 | 4,2 | 23,7 | 41,1 | 20,2 | 61,3 |
| 1,0 g Pd/$BaSO_4$ (5%) | 1 | 22 | 24 | 1,4 | 0,4 | 13,2 | 58,1 | 17,1 | 75,2 |
| 1,0 g Pd/Kieselgur (5%) | 1 | 22 | 20 | 1,3 | 2,3 | 19,5 | 54,2 | 15,0 | 69,2 |
| 0,3 g $PdCl_2$/C (vorhydriert) | 1 | 23 | 25 | 1,4 | 7,7 | 19,0 | 17,8 | 39,4 | 57,2 |
| 4,0 g Pt/C (5%); | 90 | 50 | 4 | | - | 0,3 | 53,9 | 31,5 | 85,4 |
| 2,0 g Ru/C (5%) | 90 | 50 | 24 | | 21,4 | 23,4 | 29,2 | 10,8 | 40,0 |
| 2,0 g Ir/C (5%) | 90 | 50 | 17 | | 5,2 | 21,4 | 43,5 | 14,2 | 57,7 |
| 1,0 g Rh/C (5%) | 1 | 24 | 18 | | 17,8 | 29,2 | 34,8 | 12,4 | 57,2 |
| 3,6 g Raney-Co | 90 | 50 | 6 | | 21,3 | 36,2 | 32,0 | 8,1 | 40,1 |

Beispiel 8

In analoger Weise zu Beispiel 2 wurden die in Tabelle 2 zusammengestellten Versuche durchgeführt. In Versuch (a) wurden 3,09 g (4R, 2ZE)-[5-(4-Hydroxy-2,6,6-trimethyl-1-cyclohexen-1-yl)-3-methyl-2-penten-4-inyl]triphenylphosphoniumchlorid (Isomerenverhältnis Z/E = 9 : 91) zu (4R, 2ZE, 4Z)-[5-(4-Hydroxy-2,6,6-trimethyl-1-cyclohexen-1-yl)-3-methyl-2,4-pentadienyl]triphenylphosphoniumchlorid hydriert, und in den Versuchen (b)-(e) wurden jeweils 3,36 g (4R, 2ZE)-[5-(4-Hydroxy-2,6,6-trimethyl-1-cyclohexen-1-yl)-3-methyl-2-penten-4-inyl]triphenylphosphoniumbromid (Isomerenverhältnis Z/E = 27 : 73) zu (4R, 2ZE, 4Z)-[5-(4-Hydroxy-2,6,6-trimethyl-1-cyclohexen-1-yl)-3-methyl-2,4-pentadienyl]triphenylphosphoniumbromid hydriert. Alle Versuche wurden in Gegenwart von 1,8 g Raney-Nickel bei 20 °C und unter Normaldruck durchgeführt. t bedeutet die Hydrierdauer. Die Zusammensetzung der Hydrierprodukte wurde mittels HPLC (Flächenprozente) bestimmt.

(Siehe Tabelle 2 Seite 8 f.)

Tabelle 2

| Versuch | Lösungsmittel (total 240 ml) | t (h) | Zusammensetzung des Hydrierproduktes (%) | | | | |
|---|---|---|---|---|---|---|---|
| | | | Edukt | | Produkt | | |
| | | | (2E) | (2Z) | (2E,4Z) | (2Z,4Z) | total |
| (a) | Aethanol | 25 | - | 2,2 | 77,5 | 14,6 | 92,1 |
| (b) | Methanol + 100 ml Wasser | 19 | - | 8,7 | 59,6 | 23,8 | 83,4 |
| (c) | Methylacetat + 20 ml Wasser | 22 | - | 1,0 | 61,6 | 28,3 | 89,9 |
| (d) | Tetrahydrofuran + 35 ml Wasser | 22 | - | 0,2 | 61,8 | 28,3 | 90,1 |
| (e) | Aceton + 35 ml Wasser | 2 | 1,2 | 8,7 | 59,5 | 23,8 | 84,3 |

Beispiel 9

In analoger Weise zu Beispiel 2 wurde unter den in Tabelle 3 angegebenen Bedingungen jeweils 3,36 g (4R, 2ZE)-[5-(4-Hydroxy-2,6,6-trimethyl-1-cyclohexen-1-yl)-3-methyl-2-penten-4-inyl]triphenylphosphoniumbromid (Isomerenverhältnis E/Z = 49,1 : 50,9) in 240 ml Methanol zu (4R, 2ZE, 4Z)-[5-(4-Hydroxy-2,6,6-trimethyl-1-cyclohexen-1-yl)-3-methyl-2,4-pentadienyl]triphenylphosphoniumbromid hydriert. Alle Versuche wurden in Gegenwart von 1,8 g mit Fremdmetall dotiertem Raney-Nickel und unter 1 bar Wasserstoff durchgeführt. T bedeutet die Reaktionstemperatur und t die Hydrierdauer. Die Zusammensetzung der Hydrierprodukte wurde mittels HPLC (Flächenprozente) bestimmt, wobei das Total ungefähr der chemischen Ausbeute entspricht. Bei allen Versuchen enthielt das Hydrierprodukt gemäss HPLC kein (2E)-Edukt mehr. Die Aufarbeitung der Hydrierprodukte erfolgte in analoger Weise zu Beispiel 2.

(Siehe Tabelle 3 Seite 10f.)

Tabelle 3

| Katalysator: 1,8 g Raney-Ni dotiert mit | T ($O^O$) | t (h) | $H_2$-Aufnahme (Mol-Aeq.) | Zusammensetzung des Hydrierproduktes (%) | | | | isoliertes Produkt | |
|---|---|---|---|---|---|---|---|---|---|
| | | | | Edukt (2Z) | Produkt (2E,4Z) | Produkt (2Z,4Z) | Produkt total | Ausbeute (%) | Reinheit (%) |
| 1,2% Mo | 22 | 5 | 1,35 | - | 39,1 | 48,8 | 87,9 | 54,7 | 100 |
| 1,0% Pd | 23 | 3 | 1,40 | - | 39,5 | 45,6 | 85,1 | 59,0 | 93,8 |
| 5,0% Co | 22-23 | 17 | 1,45 | 1,5 | 40,1 | 44,5 | 84,6 | 62,1 | 98,1 |
| 1,0% Ru | 21-23 | 8 | 1,37 | - | 38,3 | 47,3 | 85,6 | 68,3 | 89,0 |
| 1,0% V | 22-24 | 12 | 1,37 | 0,4 | 38,0 | 44,9 | 82,9 | 55,9 | 99,1 |
| 2,5% Co + 1,5% Mo | 22-23 | 24 | 1,22 | 14,2 | 39,2 | 37,7 | 76,9 | 72,0 | 82,8 |
| 2% Mn | 24 | 3,25 | 1,39 | 2,2 | 40,0 | 45,3 | 85,3 | 57,5 | 97,3 |
| 2% Pb | 24 | 3 | 1,35 | 1,4 | 39,5 | 45,0 | 84,5 | 48,1 | 99,2 |
| 2% Cu | 22-23 | 3 | 1,39 | - | 39,3 | 45,0 | 84,3 | 48,1 | 99,6 |

Beispiel 10

In analoger Weise zu Beispiel 2 wurde eine Lösung von 2,0 g [5-(2,6,6-Trimethyl-1-cyclohexen-1-yl)-3-methyl-2-penten-4-inyl]triphenylphosphoniumbromid (Isomerenverhältnis E/Z = 3 : 1) in 150 ml Methanol in Gegenwart von 1,1 g mit 1 % Palladium dotiertem Raney-Nickel hydriert. Innert 2 Stunden wurden 112 ml Wasserstoff aufgenommen. Das nach Filtration und Eindampfen erhaltene Rohprodukt (2,0 g) von (2ZE, 4Z)-[5-(2,6,6-Trimethyl-1-cyclohexen-1-yl)-3-methyl-2,4-pentadienyl]triphenylphosphoniumbromid [chemische Ausbeute 71 %, Isomerenverhältnis (2E, 4Z)/(2Z, 4Z) = 57 : 14 gemäss HPLC], welches noch 17 % Edukt enthielt, wurde bei 0 °C aus 40 ml Tetrahydrofuran umkristallisiert. Die weissen Kristalle wurden zweimal mit je 10 ml kaltem Tetrahydrofuran gewaschen und über Nacht bei 60 °C/15 mbar getrocknet, wobei 0,9 g (44,8 %) Produkt [enthaltend 81 % (2E, 4Z)-Isomer und 13,5 % (2Z, 4Z)-Isomer gemäss HPLC] erhalten wurden ; Smp. 182-184 °C.

Beispiel 11

In analoger Weise zu Beispiel 2 wurde eine Lösung von 3,26 g [5-(2,6,6-Trimethyl-1-cyclohexen-1-yl)-3-methyl-2-penten-4-inyl]triphenylphosphoniumbromid (Isomerenverhältnis E/Z = 3 : 1) in 220 ml Methylacetat und 20 ml Wasser in Gegenwart von 1,8 g wasserfeuchtem Raney-Nickel hydriert. Innert 24 Stunden wurden 185 ml Wasserstoff aufgenommen. Das nach Filtration und Eindampfen erhaltene Rohprodukt (3,3 g) von (2ZE, 4Z)-[5-(2,6,6-Trimethyl-1-cyclohexen-1-yl)-3-methyl-2,4-pentadienyl]triphenylphosphoniumbromid [chemische Ausbeute 76 %, Isomerenverhältnis (2E, 4Z)/(2Z, 4Z) = 61 : 15 gemäss HPLC], welches noch 10,8 % Edukt enthielt, wurde bei 0 °C aus 40 ml Tetrahydrofuran umkristallisiert. Die weissen Kristalle wurden zweimal mit je 10 ml kaltem Tetrahydrofuran gewaschen und über Nacht bei 60 °C/15 mbar getrocknet, wobei 1,4 g (42,9 %) Produkt [enthaltend 79 % (2E, 4Z)-Isomer und 16 % (2Z, 4Z)-Isomer gemäss HPLC] erhalten wurden ; Smp. 176-178 °C.

Beispiel 12

In einem Sulfierkolben mit Begasungsrührer wurde eine Lösung von 2,0 g [5-(2,6,6-Trimethyl-1-cyclohexen-1-yl)-3-methyl-2-penten-4-inyl]triphenylphosphoniumbromid (Isomerenverhältnis E/Z = 3 : 1) in 150 ml Methanol in Gegenwart von 2,5 g Platin/Kohle (5 %) bei 50 °C unter Druck (90 bar) hydriert. Das nach Filtration und Eindampfen erhaltene Rohprodukt (2,0 g) von (2ZE, 4Z)-[5-(2,6,6-Trimethyl-1-cyclohexen-1-yl)-3-methyl-2,4-pentadienyl]triphenylphosphoniumbromid [chemische Ausbeute 86 %, Isomerenverhältnis (2E, 4Z)/(2Z, 4Z) = 65 : 21 gemäss HPLC], welches noch 4 % Edukt enthielt, wurde bei 0 °C aus 40 ml Tetrahydrofuran umkristallisiert. Die weissen Kristalle wurden zweimal mit je 10 ml kaltem Tetrahydrofuran gewaschen und über Nacht bei 60 °C/15 mbar getrocknet, wobei 0,95 g (47,5 %) Produkt [enthaltend 76 % (2E, 4Z)-Isomer und 19 % (2Z, 4Z)-Isomer gemäss HPLC] erhalten wurden ; Smp. 177-179 °C.

Beispiel 13

In analoger Weise zu Beispiel 2 wurde eine Lösung von 3,36 g (4R, 2ZE)-[5-(4-Hydroxy-2,6,6-trimethyl-1-cyclohexen-1-yl)-3-methyl-2-penten-4-inyl]triphenylphosphoniumbromid (Isomerenverhältnis Z/E = 2,8 : 97,2) in 240 ml Methanol in Gegenwart von 1,8 g feuchtem, mit 1,2 % Molybdän dotiertem Raney-Nickel hydriert. Innert 9 Stunden wurden 168 ml Wasserstoff aufgenommen. Das nach Filtration und Eindampfen erhaltene Rohprodukt von (4R, 2ZE, 4Z)-[5-(4-Hydroxy-2,6,6-trimethyl-1-cyclohexen-1-yl)-3-methyl-2,4-pentadienyl]triphenylphosphoniumbromid [chemische Ausbeute 93,3 % Isomerenverhältnis (2E, 4Z)/(2Z, 4Z) = 87,1 : 6,2 gemäss HPLC] wurde in 15 ml Methylenchlorid gelöst und durch Zutropfen von 40 ml Essigester kristallisiert. Nach 16-stündigem Stehen bei 0 °C wurden die hellbeigen Kristalle abfiltriert, mit wenig Methylenchlorid/Essigester (Volumenverhältnis 1 : 2) gewaschen und getrocknet, wobei 2,55 g (75,7 %) Produkt [enthaltend 91,6 % (2E, 4Z)-Isomer und 5,5 % (2Z, 4Z)-Isomer gemäss HPLC] erhalten wurden ; Smp. 203-204 °C.

Beispiel 14

In analoger Weise zu Beispiel 2 wurde eine Lösung von 3,36 g (4R, 2E)-[5-(4-Hydroxy-2,6,6-trimethyl-1-cyclohexen-1-yl)-3-methyl-2-penten-4-inyl]triphenylphosphoniumbromid [enthaltend 0,6 % (2Z)-Isomer] in 240 ml Methanol in Gegenwart von 1 g Palladium/Bariumsulfat (5 %) hydriert. Innert 2 Stunden wurden 200 ml Wasserstoff aufgenommen. Das nach Filtration und Eindampfen erhaltene Rohprodukt von (4R, 2ZE, 4Z)-[5-(4-Hydroxy-2,6,6-trimethyl-1-cyclohexen-1-yl)-3-methyl-2,4-pentadienyl]triphenylphosphoniumbromid [chemische Ausbeute 90,3 %, Isomerenverhältnis (2E, 4Z)/(2Z, 4Z) = 81,8 : 8,5 gemäss HPLC] wurde in 12 ml Methylenchlorid gelöst und durch Zutropfen von 20 ml Essigester kristallisiert. Nach 16-stündigem Stehen bei 0 °C wurden die hellbeigen Kristalle abfiltriert, mit wenig Methylenchlorid/Essigester (Volumenverhältnis 1 : 2) gewaschen und getrocknet, wobei 2,20 g (65,9 %) Produkt [enthaltend 89,6 % (2E, 4Z)-Isomer und 9,8 % (2Z, 4Z)-Isomer gemäss HPLC] erhalten wurden ; Smp. 198-199 °C.

Beispiel 15

In einem Hydrierkolben mit Begasungsrührer wurde eine Lösung von 30,0 g (4R, 2E)-[5-(4-Hydroxy-2,6,6-trimethyl-1-cyclohexen-1-yl)-3-methyl-2-penten-4-inyl]triphenylphosphoniumbromid in 1 Liter Methanol in Gegenwart von 10 g Raney-Nickel bei 22 °C und 0,1 bar Wasserstoff hydriert. Innert 3,5 Stunden wurden 1,3 l Wasserstoff aufgenommen. Das nach Filtration und Eindampfen erhaltene Rohprodukt von (4R, 2ZE, 4Z)-[5-(4-Hydroxy-2,6,6-trimethyl-1-cyclohexen-1-yl)-3-methyl-2,4-pentadienyl]triphenylphosphoniumbromid [chemische Ausbeute 94,2 %, Isomerenverhältnis (2E, 4Z)/(2Z, 4Z) = 87,2 : 7,0 gemäss HPLC] wurde aus 15 ml Methanol und 190 ml Essigester kristallisiert. Nach 16-stündigem Stehen bei 0 °C wurden die Kristalle abfiltriert, mit wenig Methanol/Essigester (Volumenverhältnis 1 : 9) gewaschen und getrocknet, wobei 21,3 g (73,5 %) reines Produkt [bestehend aus 94,4 % (2E, 4Z)-Isomer und 5,6 % (2Z, 4Z)-Isomer gemäss HPLC] erhalten wurden ; Smp. 207-208 °C, $[\alpha]_D^{20}$ = — 23,4° (c = 1, Chloroform).

Beispiel 16

In analoger Weise zu Beispiel 2 wurde eine Lösung von 3,42 g (Z)-[5-(4-Methoxy-2,3,6-trimethylphenyl)-3-methyl-2-penten-4-inyl]triphenylphosphoniumbromid in 240 ml Methanol in Gegenwart von 1,8 g Palladium/Bariumsulfat (5 %) hydriert. Innert 2 Stunden wurden 188 ml Wasserstoff aufgenommen. Das nach Filtration und Eindampfen erhaltene Rohprodukt (3,4 g) von (2Z, 4Z)-[5-(4-Methoxy-2,3,6-trimethylphenyl)-3-methyl-2,4-pentadienyl]triphenylphosphoniumbromid (chemische Ausbeute 54,6 % gemäss HPLC) wurde in 20 ml Methylenchlorid gelöst und durch Zutropfen von 50 ml Essigester unter Rühren kristallisiert. Die Suspension wurde über Nacht bei 0 °C stehengelassen und filtriert. Die Kristalle wurden mit wenig Essigester/Methylenchlorid (Volumenverhältnis 5 : 1) gewaschen und bei Raumtemperatur/0,01 mbar getrocknet. Hierbei wurde 1,0 g 94,9 %-iges (2Z, 4Z)-[5-(4-Methoxy-2,3,6-trimethylphenyl)-3-methyl-2,4-pentadienyl]triphenylphosphoniumbromid erhalten ; Smp. 202-205 °C.

Beispiel 17

In einem Sulfierkolben mit Rührer, Thermometer, Tropftrichter mit Druckausgleich und Argonaufsatz wurde eine Suspension von 126,2 g (1RS, 2R, 4R, 2E)-5-(1,4-Dihydroxy-2,6,6-trimethyl-1-cyclohexyl)-3-methyl-2-penten-4-in-1-ol in 1 Liter Methylenchlorid auf 0 °C gekühlt und dann unter Rühren innert 15 Minuten mit 283 ml 48 %-iger wässriger Bromwasserstoff-Lösung versetzt. Das violett-schwarze Gemisch wurde bei 0 °C kräftig weitergerührt, bis gemäss Dünnschichtchromatographie vollständiger Umsatz erreicht war (ca. 1-1,5 Stunden). Zur Aufarbeitung wurden drei Scheidetrichter $S_1$-$S_3$ mit je 250 ml halbgesättigter wässriger Kochsalzlösung beschickt. Nun wurden der Reihe nach und unter guter Durchmischung zunächst das Reaktionsgemisch und dann dreimal je 100 ml Methylenchlorid durch die Scheidetrichter $S_1$-$S_3$ gezogen. Die abgetrennte organische Phase wurde über 50 g Natriumsulfat getrocknet, die Suspension genutscht und der Filterrückstand mit 100 ml Methylenchlorid nachgewaschen. Die Filtrate wurden im Rotationsverdampfer am Wasserstrahlvakuum auf ein Volumen von ca. 1,2 l konzentriert und sofort zu 144,2 g kristallinem Triphenylphosphin, welches in einem Sulfierkolben mit Rührer, Thermometer und Rückflusskühler mit aufgesetztem Begasungsstutzen vorgelegt worden war, so zugetropft, dass die exotherme Reaktion am kontrollierten Rückfluss gehalten werden konnte (Dosierzeit 1 Stunde). Anschliessend wurde bis zum beendeten Umsatz (ca. 2 Stunden) nachgerührt, wobei das Produkt teilweise auskristallisierte. Die Suspension wurde nun im Rotationsverdampfer am Wasserstrahlvakuum nahezu eingeengt (450 g braunes Kristallisat), am Rückfluss in 100 ml Methanol gelöst und die Lösung ohne Kühlbad unter mechanischem Rühren innert 1 Stunde mit 1,2 l Essigester versetzt. Die Produktkristallisation setzte nach Zugabe von ca. 800 ml Essigester ein. Die Suspension wurde über Nacht auf — 15 °C gekühlt, dann genutscht und das Produkt mit dreimal 500 ml Essigester sehr gründlich ausgewaschen, wobei beige Kristalle erhalten wurden. Das noch lösungsmittelfeuchte Kristallisat wurde in 100 ml Methanol am Rückfluss gelöst und die Lösung ohne Kühlbad unter mechanischem Rühren innert 30 Minuten mit 1,2 l Essigester versetzt. Die Produktkristallisation setzte nun nach Zugabe von ca. 270 ml Essigester ein. Die Suspension wurde über Nacht bei — 15 °C gelagert, dann genutscht und das Produkt mit dreimal 500 ml Essigester sehr gründlich ausgewaschen und im Trockenschrank am Wasserstrahlvakuum bei 40 °C bis zu Gewichtskonstanz getrocknet. Auf diese Weise wurden 151,6 g (54,2 %) (4R, 2ZE)-[5-(4-Hydroxy-2,6,6-trimethyl-1-cyclohexen-1-yl)-3-methyl-2-penten-4-inyl]triphenylphosphoniumbromid [bestehend aus 37,4 % (2E)-Isomer und 62,6 % (2Z)-Isomer] als hellbeiges Pulver erhalten ; Smp. 199-200 °C, $[\alpha]_D$ = — 47,2° (0,25 %, Chloroform). Die Mutterlaugen der beiden vorgehend erwähnten Kkristallisationen wurden aufgearbeitet und dreimal aus je 100 ml Methanol und je 1 Liter Essigester in der oben beschriebenen Weise kristallisiert. Hierbei wurden 55,7 g (19,9 %) (4R, 2E)-[5-(4-Hydroxy-2,6,6-trimethyl-1-cyclohexen-1-yl)-3-methyl-2-penten-4-inyl]triphenylphosphoniumbromid als hellbeiges Pulver erhalten ; Smp. 205-207 °C, $[\alpha]_D$ = — 44,5° (1,0 %, Chloroform). Die letzte Mutterlauge, welche noch Produkt enthielt, wurde nicht aufgearbeitet. Gesamtausbeute 207,3 g (74,1 %).

Beispiel 18

In einem Sulfierkolben mit Begasungsrührer wurden 12,0 g Raney-Nickel, 132,0 mg 1,2-Bis(2-hydroxyäthylthio)-äthan und 200 ml Methanol vorgelegt und während 40 Minuten bei Raumtemperatur vorhydriert. Anschliessend wurde eine Lösung von 24,4 g (2E)-[5-(2,6,6-Trimethyl-1-cyclohexen-1-yl)-3-methyl-2-penten-4-inyl]triphenylphosphoniumbromid in 400 ml Methanol zugegeben und das Gemisch 15,5 Stunden bei Raumtemperatur unter Normaldruck hydriert (Wasserstoffverbrauch 1 150 ml). Das Reaktionsgemisch wurde filtriert und der Rückstand mit Methanol gut nachgewaschen. Das Filtrat wurde am Rotationsverdampfer unter Vakuum bei ca. 40 °C Badtemperatur eingeengt und der Rückstand am Hochvakuum kurz getrocknet. Das erhaltene Rohprodukt (27,3 g) wurde in 20 ml Methylenchlorid gelöst und die Lösung unter Animpfen tropfenweise mit 300 ml Essigsäureäthylester versetzt und noch 4 Stunden bei Raumtemperatur gerührt. Der Niederschlag wurde abgenutscht, mit Essigsäureäthylester gut gewaschen und am Hochvakuum getrocknet. Hierbei wurden 19,5 g (79,6 %) (2E, 4Z)-[5-(2,6,6-Trimethyl-1-cyclohexen-1-yl)-3-methyl-2,4-pentadienyl]triphenylphosphoniumbromid als weisse Kristalle erhalten.

Beispiel 19

In einem Sulfierkolben mit Begasungsrührer wurde eine Suspension von 46,6 g wasserfeuchtem Raney-Nickel und 518 mg 1,2-Bis(2-hydroxyäthylthio)äthan in 1 l Methanol bei 30 °C unter Normaldruck vorhydriert. Anschliessend wurde eine Lösung von 320 g (4R, 2E)-[5-(4-Hydroxy-2,6,6-trimethyl-1-cyclohexen-1-yl)-3-methyl-2-penten-4-inyl]triphenylphosphoniumchlorid in 2,1 l Methanol zugegeben und das Gemisch bei 40 °C und 1,1 bar Wasserstoff hydriert. Innert 5 Minuten wurden 15,6 l Wasserstoff aufgenommen. Der Katalysator wurde abfiltriert und das Filtrat auf ein Gewicht von 575 g eingeengt. Durch langsames Zugiessen von 9,6 l Essigsäureäthylester wurde das Produkt kristallisiert. Die Suspension wurde 2 Stunden bei Raumtemperatur gerührt und filtriert. Die Kristalle wurden mit wenig Methanol/Essigsäureäthylester gewaschen und bei 60 °C/0,01 mbar getrocknet, wobei 272,2 g (84,7 %) [5-(4-Hydroxy-2,6,6-trimethyl-1-cyclohexen-1-yl)-3-methyl-2,4-pentadienyl]triphenylphosphoniumchlorid (enthaltend 97 % (4R, 2E, 4Z)-Isomer und 2 % (4R, 2Z, 4Z)-Isomer gemäss HPLC) mit Smp. 211-212 °C und $[\alpha]_D^{20} = -26{,}2^\circ$ (c = 1, Chloroform) erhalten wurden.

Beispiel 20

In analoger Weise zu Beispiel 19 wurden 200 g (4R, 2E)-[5-(4-Hydroxy-2,6,6-trimethyl-1-cyclohexen-1-yl)-3-methyl-2-penten-4-inyl]triphenylphosphoniumchlorid in Gegenwart von 58 g wasserfeuchtem und mit 650 mg 1,2-Bis-(2-hydroxyäthylthio)äthan vorbehandelten Raney-Nickel bei 40 °C und 1,1 bar Wasserstoff hydriert. Nach dem Abkühlen wurde die über dem Katalysator stehende Lösung abgesaugt, filtriert und wie in Beispiel 19 aufgearbeitet. Dieses Verfahren wurde noch zweimal wiederholt, wobei jeweils der Katalysatorrückstand des vorangehenden Zyklus, 2 l Methanol, 11 g frischer Raney-Nickel und 200 g Edukt eingesetzt wurden und die Hydrierung wiederum bei 40 °C und 1,1 bar Wasserstoff durchgeführt wurde. Die jeweilige Hydrierdauer t und die Ausbeute an kristallinem [5-(4-Hydroxy-2,6,6-trimethyl-1-cyclohexen-1-yl)-3-methyl-2,4-pentadienyl]-triphenylphosphoniumchlorid sowie dessen Gehalt an (4R, 2E, 4Z)-Isomer gemäss HPLC und die $[\alpha]_D^{20}$-Werte (c = 1, Chloroform) sind in Tabelle 4 angegeben.

Tabelle 4

| | t | Ausbeute | (4R,2E,4Z)-Isomer | $[\alpha]_D^{20}$ |
|---|---|---|---|---|
| 1. Zyklus | 1,5 h | 143,4 g | 95,3% | -26,2° |
| 2. Zyklus | 1,5 h | 167,5 g | 95,6% | -26,1° |
| 3. Zyklus | 2,5 h | 188,7 g | 97,2% | -26,3° |

Beispiel 21

Eine Lösung von 200 g (4R, 2Z)-[5-(4-Hydroxy-2,6,6-trimethyl-1-cyclohexen-1-yl)-3-methyl-2-penten-4-inyl]-triphenylphosphoniumchlorid in 2 l Methanol wurde in Gegenwart von 58 g des nach Beispiel 19 vorbehandelten Katalysator 6 Stunden bei 19-28 °C und dann 11 Stunden bei 40 °C unter Normaldruck hydriert. Aufarbeitung in analoger Weise zu Beispiel 19 ergab 159,4 g (79,4 %) weisse Kristalle, welche neben (4R, 2Z, 4Z)-[5-(4-Hydroxy-2,6,6-trimethyl-1-cyclohexen-1-yl)-3-methyl-2,4-pentadienyl]triphenyl-

phosphoniumchlorid noch 5,6 % Methanol und 0,2 % Essigsäureäthylester enthielten ; Smp. 123-127 °C, $[\alpha]_D^{20}$ = —20,4° (c = 1, Chloroform).

**Patentansprüche**

1. Verfahren zur Herstellung von Verbindungen der allgemeinen Formel

$$R^1-CH=CH-\overset{CH_3}{\overset{|}{C}}=CH-CH_2P(R^2)_3^{\oplus}\ X^{\ominus} \qquad (I)$$

worin $R^1$ einen gegebenenfalls durch eine Hydroxygruppe oder eine geschützte Hydroxygruppe substitutierten 2,6,6-Trimethyl-1-cyclohexen-1-yl- oder 2,3,6-Trimethylphenylrest darstellt, $R^2$ Aryl bedeutet und $X^{\ominus}$ ein in Phosphoniumsalzen übliches Anion bezeichnet, dadurch gekennzeichnet, dass man eine Verbindung der allgemeinen Formel

$$R^1-C\equiv C-\overset{CH_3}{\overset{|}{C}}=CH-CH_2P(R^2)_3^{\oplus}\ X^{\ominus} \qquad (II)$$

worin $R^1$, $R^2$ und $X^{\ominus}$ die obigen Bedeutungen haben, in einem organischen Lösungsmittel oder wässrig-organischen Lösungsmittelgemisch in Gegenwart eines Nickel-, Palladium-, Platin-, Kobalt-, Rhodium-, Iridium- oder Ruthenium-haltigen Katalysators partiell hydriert.

2. Verfahren nach Anspruch 1, dadurch gekennzeichnet, dass man eine Verbindung der Formel II umsetzt, worin $R^1$ einen gegebenenfalls durch eine Hydroxy-, Methoxy- oder Acetoxygruppe substitutierten 2,6,6-Trimethyl-1-cyclohexen-1-yl- oder 2,3,6-Trimethylphenylrest darstellt.

3. Verfahren nach Anspruch 2, dadurch gekennzeichnet, dass man eine Verbindung der Formel II umsetzt, worin $R^1$ 2,6,6-Trimethyl-1-cyclohexen-1-yl, 4-Hydroxy-2,6,6-trimethyl-1-cyclohexen-1-yl, 2,3,6-Trimethylphenyl oder 4-Methoxy-2,3,6-trimethylphenyl darstellt.

4. Verfahren nach einem der Ansprüche 1 bis 3, dadurch gekennzeichnet, dass man einen heterogenen Katalysator verwendet.

5. Verfahren nach Anspruch 4, dadurch gekennzeichnet, dass man einen metallischen Katalysator verwendet, welcher gegebenenfalls mit Fremdmetallen dotiert und/oder durch Katalysatorgifte teilweise vergiftet ist.

6. Verfahren nach Anspruch 5, dadurch gekennzeichnet, dass man als metallischen Katalysator Platin, Nickel oder Palladium, vorzugsweise Raney-Nickel verwendet.

7. Verfahren nach Anspruch 6, dadurch gekennzeichnet, dass man als Katalysator Raney-Nickel verwendet, welches gegebenenfalls mit Molybdän, Ruthenium, Mangan, Palladium, Kobalt, Blei, Kupfer oder Vanadium dotiert oder mit 1,2-Bis-(2-hydroxyäthylthio)äthan teilweise vergiftet ist.

8. Verfahren nach einem der Ansprüche 1 bis 7, dadurch gekennzeichnet, dass man als organisches Lösungsmittel oder als organische Komponente eines wässrig-organischen Lösungsmittelgemisches einen Alkohol, Ester, Aether oder Keton verwendet.

9. Verfahren nach Anspruch 8, dadurch gekennzeichnet, dass man als Lösungsmittel Methanol, Aethanol oder ein Gemisch von Methanol, Aethanol, Methylacetat, Tetrahydrofuran oder Aceton mit Wasser verwendet.

10. Verfahren nach Anspruch 9, dadurch gekennzeichnet, dass man als Lösungsmittel Methanol verwendet.

**Claims**

1. A process for the manufacture of compounds of the general formula

$$R^1-CH=CH-\overset{CH_3}{\overset{|}{C}}=CH-CH_2P(R^2)_3^{\oplus}\ X^{\ominus} \qquad (I)$$

wherein $R^1$ represents a 2,6,6-trimethyl-1-cyclohexen-1-yl or 2,3,6-trimethylphenyl residue which is optionally substituted by a hydroxy group or a protected hydroxy group, $R^2$ signifies aryl and $X^{\ominus}$ denotes an anion which is usual in phosphonium salts, characterized by partially hydrogenating a compound of the general formula

$$R^1-C\equiv C-\overset{CH_3}{\overset{|}{C}}=CH-CH_2P(R^2)_3^{\oplus}\ X^{\ominus} \qquad (II)$$

wherein $R^1$, $R^2$ and $X^{\ominus}$ have the above significances, in an organic solvent or aqueous-organic solvent mixture in the presence of a nickel-, palladium-, platinum-, cobalt-, rhodium-, iridium- or ruthenium-containing catalyst.

2. A process according to claim 1, characterized in that a compound of formula II in which $R^1$ represents a 2,6,6-trimethyl-1-cyclohexen-1-yl or 2,3,6-trimethylphenyl residue which is optionally substituted by a hydroxy, methoxy or acetoxy group is reacted.

3. A process according to claim 2, characterized in that a compound of formula II in which $R^1$ represents 2,6,6-trimethyl-1-cyclohexen-1-yl, 4-hydroxy-2,6,6-trimethyl-1-cyclohexen-1-yl, 2,3,6-trimethylphenyl or 4-methoxy-2,3,6-trimethylphenyl is reacted.

4. A process according to any one of claims 1 to 3, characterized in that a heterogeneous catalyst is used.

5. A process according to claim 4, characterized in that a metallic catalyst which is optionally doped with foreign metals and/or partially poisoned by catalyst poisons is used.

6. A process according to claim 5, characterized in that platinum, nickel or palladium, preferably Raney-nickel, is used as the metallic catalyst.

7. A process according to claim 6, characterized in that Raney-nickel which is optionally doped with molybdenum, ruthenium, manganese, palladium, cobalt, lead, copper or vanadium or partially poisoned with 1,2-bis-(2-hydroxyethylthio)ethane is used as the catalyst.

8. A process according to any one of claims 1 to 7, characterized in that an alcohol, ester, ether or ketone is used as the organic solvent or as the organic component of an aqueous-organic solvent mixture.

9. A process according to claim 8, characterized in that methanol, ethanol or a mixture of methanol, ethanol, methyl acetate, tetrahydrofuran or acetone with water is used as the solvent.

10. A process according to claim 9, characterized in that methanol is used as the solvent.

**Revendications**

1. Procédé de préparation de composés de formule générale

$$R^1-CH=CH-\overset{CH_3}{\overset{|}{C}}=CH-CH_2P(R^2)_3^{\oplus}\ X^{\ominus} \qquad (I)$$

où $R^1$ représente un radical 2,6,6-triméthyl-1-cyclohexène-1-yle ou 2,3,6-triméthylphényle éventuellement substitué par un groupe hydroxy ou un groupe hydroxy protégé, $R^2$ représente un aryle et $X^{\ominus}$ représente un anion habituel dans les sels de phosphonium, caractérisé en ce qu'on hydrogène partiellement un composé de formule générale

$$R^1-C\equiv C-\overset{CH_3}{\overset{|}{C}}=CH-CH_2P(R^2)_3^{\oplus}\ X^{\ominus} \qquad (II)$$

où $R^1$, $R^2$ et $X^{\ominus}$ ont la signification ci-dessus, dans un solvant organique ou un mélange de solvants organique-aqueux en présence d'un catalyseur contenant du nickel, du palladium, du platine, du cobalt, du rhodium, de l'iridium ou du ruthénium.

2. Procédé selon la revendication 1, caractérisé en ce qu'on fait réagir un composé de formule II où $R^1$ représente un radical 2,6,6-triméthyl-1-cyclohexène-1-yle ou 2,3,6-triméthylphényle éventuellement substitué par un groupe hydroxy, méthoxy ou acétoxy.

3. Procédé selon la revendication 2, caractérisé en ce qu'on fait réagir un composé de formule II où $R^1$ représente un 2,6,6-triméthyl-1-cyclohexène-1-yle, un 4-hydroxy-2,6,6-triméthyl-1-cyclohexène-1-yle, un 2,3,6-triméthylphényle ou un 4-méthoxy-2,3,6-triméthylphényle.

4. Procédé selon l'une des revendications 1 à 3, caractérisé en ce qu'on utilise un catalyseur hétérogène.

5. Procédé selon la revendication 4, caractérisé en ce qu'on utilise un catalyseur métallique qui est éventuellement doté de métaux étrangers et/ou partiellement empoisonné par des poisons de catalyseurs.

6. Procédé selon la revendication 5, caractérisé en ce qu'on utilise comme catalyseur métallique le platine, le nickel ou le palladium, de préférence le nickel de Raney.

7. Procédé selon la revendication 6, caractérisé en ce qu'on utilise comme catalyseur le nickel de Raney, qui est éventuellement doté de molybdène, de ruthénium, de manganèse, de palladium, de cobalt, de plomb, de cuivre ou de vanadium ou partiellement empoisonné avec du 1,2-bis-(2-hydroxyéthylthio)éthane.

8. Procédé selon l'une des revendications 1 à 7, caractérisé en ce qu'on utilise comme solvant organique ou comme composant organique d'un mélange de solvants organique-aqueux un alcool, un ester, un éther ou une cétone.

9. Procédé selon la revendication 8, caractérisé en ce qu'on utilise comme solvant le méthanol, l'éthanol ou un mélange de méthanol, d'éthanol, d'acétate de méthyle, de tétrahydrofuranne ou d'acétone avec de l'eau.

10. Procédé selon la revendication 9, caractérisé en ce qu'on utilise comme solvant le méthanol.